(19)

Europäisches
Patentamt
European
Patent Office
Office européen
des brevets

(11)　　EP 4 350 830 A1

(12)　　　　　EUROPEAN PATENT APPLICATION

(43) Date of publication:
　　　10.04.2024　Bulletin 2024/15

(21) Application number: 23200412.7

(22) Date of filing: 28.09.2023

(51) International Patent Classification (IPC):
　　　$H01M\ 10/052^{(2010.01)}$　　　$H01M\ 10/0562^{(2010.01)}$

(52) Cooperative Patent Classification (CPC):
　　　H01M 10/0562; H01M 10/052; C04B 2235/3227;
　　　H01M 2300/0071

(84) Designated Contracting States:
　　　AL AT BE BG CH CY CZ DE DK EE ES FI FR GB
　　　GR HR HU IE IS IT LI LT LU LV MC ME MK MT NL
　　　NO PL PT RO RS SE SI SK SM TR
　　　Designated Extension States:
　　　BA
　　　Designated Validation States:
　　　KH MA MD TN

(30) Priority:　04.10.2022　KR 20220126399
　　　　　　　　　26.05.2023　KR 20230068607

(71) Applicant: SK On Co., Ltd.
　　　Seoul 03161 (KR)

(72) Inventors:
　　　• YI, Eun Jeong
　　　　34124 Daejeon (KR)
　　　• PARK, Ji Young
　　　　34124 Daejeon (KR)
　　　• KIM, Kyeong Joon
　　　　34124 Daejeon (KR)
　　　• KIM, Min Kyu
　　　　34124 Daejeon (KR)

(74) Representative: Prüfer & Partner mbB
　　　Patentanwälte · Rechtsanwälte
　　　Sohnckestraße 12
　　　81479 München (DE)

(54)　**OXIDE-BASED THIN FILM SINTERED BODY, OXIDE-BASED SOLID ELECTROLYTE SHEET, AND ALL-SOLID LITHIUM SECONDARY BATTERY**

(57)　　Oxide-based thin film sintered bodies, oxide-based solid electrolyte sheets, and all-solid lithium secondary batteries are disclosed. In some implementations, an oxide-based thin film sintered body includes oxide particles, the oxide-based thin film sintered body having a surface roughness Ra ranging from 0.1 to 3 $\mu$m, wherein Ra is an arithmetical mean height of a surface, wherein the oxide particles absorb light energy in a wavelength range from 10 to 1200 nm and have an energy band gap ranging from 0.1 to 15 eV.

FIG. 4

EP 4 350 830 A1

**Description**

**TECHNICAL FIELD**

The technology and implementations disclosed in this patent document generally relate to a solid electrolyte and a secondary battery including the solid electrolyte.

**BACKGROUND**

As interest in environmental issues has recently grown, examples of various efforts for addressing environmental issues are replacing fossil fuel-based vehicles, which are one of the main causes of adverse effects such as air pollution and greenhouse emissions, with electric vehicles (EVs) and providing battery based energy storage systems (ESS) to store renewable energy such as solar power and wind power. Lithium secondary batteries having a high discharge voltage and output stability can be used for electric vehicles (EVs), power storage systems, portable electronic devices, and other electrically powered device and systems.

**SUMMARY**

The disclosed technology can be implemented in some embodiments to provide an oxide-based thin film sintered body in which an oxide-based solid electrolyte sheet having excellent performance may be manufactured through a photosintering process. The disclosed technology can be used in various systems including, for example, a secondary battery including the disclosed solid electrolyte.

The disclosed technology can be implemented in some embodiments to provide an oxide-based solid electrolyte sheet that may be manufactured in a short period of time by being sintered at high speed using photosintering and may be thinned and enlarged to a large area without additional processing.

The disclosed technology can be implemented in some embodiments to provide an oxide-based solid electrolyte sheet manufactured without problems such as substrate deformation and sheet damage and which has excellent durability.

The disclosed technology can be implemented in some embodiments to provide an all-solid lithium secondary battery having improved safety and energy density by including an oxide-based solid electrolyte sheet having excellent performance.

In some embodiments of the disclosed technology, an oxide-based thin film sintered body includes oxide particles having an energy band gap of 0.1 to 15 eV and absorbing light energy in a wavelength range of 10 to 1200 nm, the oxide-based thin film sintered body having a surface roughness Ra (arithmetical mean height of the surface) of 0.1 to 3 $\mu$m. In some implementations, the surface roughness Ra indicates a 2D average roughness.

The oxide-based thin film sintered body may have a surface roughness Sa (arithmetical mean height of the surface) of 1 to 10 $\mu$m. In some implementations, the surface roughness Sa indicates a 3D average roughness.

The oxide particles may have a contact area (A) with another oxide particle, satisfying Equation (1) A=$\pi$xa < $3\pi r^2$. In this case, in Equation (1), r is a radius of a major axis of a contact surface generated by contact between the oxide particles and another adjacent oxide particle, a is a radius of a minor axis of the contact surface, and $0.1r \leq x \leq 3r$.

The oxide-based thin film sintered body may include pores, and may have a porosity of 1 to 70%.

The at least one of the oxide particles of the oxide-based thin film sintered body may comprise first oxide particles providing ion conductivity, preferably lithium ion conductivity, and may optionally comprise second oxide particles absorbing light energy in a wavelength region of 10 to 1200nm, preferably in a wavelength region of visible light of 380 to 780nm.

At least one of the oxide particles may include a lithium element.

At least one of the oxide particles may include a metal element other than lithium.

The oxide particles may be two or more types.

The oxide particles may include at least one lithium ion conductive oxide particle selected from the group consisting of a Garnet compound, a sodium (Na) super ionic conductor (NASICON) compound, and a Perovskite compound.

At least one of the oxide particles may be LLZO.

The oxide-based thin film sintered body may have a peak at a binding energy value of 50 to 60 eV as a result of XPS analysis.

The oxide-based thin film sintered body may further include colored oxide particles, notably second oxide particles, capable of absorbing light energy in a wavelength range of 10 to 1200 nm.

The colored oxide particles may be at least one kind of oxide selected from the group consisting of transition metal elements and lanthanide elements.

The colored oxide particles may be oxide particles containing at least one kind selected from the group consisting of V, W, Fe, Bi, Zn, Co, Mn, Cu, Ce, As, Se, Sb, Cr, Ni, Nb, Mo, Ru, Rh, Pd, Pr, Nd, Tb and Er, or oxide particles containing at least one of the above elements and lithium.

The oxide-based thin film sintered body may have a thickness of 300 $\mu$m or less.

In some embodiments of the disclosed technology, an oxide-based solid electrolyte sheet the oxide-based thin film sintered body comprising an oxide particles,, the oxide-based thin film sintered body has a surface roughness Ra (arithmetical mean height of the surface) of 0.1 to 3 $\mu$m and the oxide particles have an energy band gap of 0.1 to 15 eV and absorbing light energy in a wavelength range of 10 to 1200 nm,

The oxide-based solid electrolyte sheet may have an ionic conductivity of 0.001 to 10 mS/cm.

When a thickness of the oxide-based thin film is 300 $\mu$m or less, hardness may be 10 GPa or less (Vickers Hardness).

The oxide-based thin film sintered body may be obtained by photosintering.

In some embodiments of the disclosed technology, a secondary battery comprises an oxide-based solid electrolyte sheet, wherein the oxide-based solid electrolyte sheet comprises: an oxide-based thin film sintered body that includes oxide particles, wherein the oxide-based thin film sintered body has a surface roughness Ra ranging from 0.1 to 3 $\mu$m, wherein Ra is an arithmetical mean height of a surface, wherein the oxide particles absorb light energy in a wavelength range from 10 to 1200 nm and have an energy band gap ranging from 0.1 to 15 eV.

The oxide-based solid electrolyte sheet may have an ionic conductivity of 0.001 to 10 mS/cm.

When a thickness of the oxide-based thin film is 300 $\mu$m or less, hardness may be 10 GPa or less (Vickers Hardness).

In a particular embodiment, the oxide particles in method step (a) may comprise first oxide particles providing ion conductivity, preferably lithium ion conductivity, and may optionally comprise second oxide particles absorbing light energy in a wavelength region of 10 to 1200nm, preferably in a wavelength region of visible light of 380 to 780nm.

The photosintering may include light in the wavelength range of 10 to 1200nm, preferably 380 to 780nm, is repeatedly irradiated multiple times, preferably the light source may emit pulsed light.

In a further aspect of the present disclosure, an all-solid lithium secondary battery comprises: a cathode, an anode facing the cathode, and the above defined oxide-based solid electrolyte sheet.

In the above all-solid lithium secondary battery, which does not use liquid components, the oxide-based solid electrolyte sheet is typically disposed between the cathode and the anode.

## BRIEF DESCRIPTION OF DRAWINGS

Certain aspects, features, and advantages of the disclosed technology are illustrated by the following detailed description with reference to the accompanying drawings.

FIG. 1 is a graph illustrating light absorbance according to a wavelength of light for iron-based colored oxide, vanadium-based colored oxide, phosphate oxide, and lithium conductive glass.

FIGS. 2A to 2D are conceptual diagrams respectively illustrating the form in which the inter-particle connection structure and particle shape change according to the progress of sintering.

FIG. 3 is a SEM image of a molded body molded using oxide particles and a view conceptually illustrating that oxide particles form point contact.

FIG. 4 illustrates an SEM image of an oxide-based thin film sintered body obtained by photosintering the molded body of oxide particles of FIG. 3, and is a view conceptually illustrating that pores are maintained while forming surface contact between particles.

FIG. 5 illustrates an SEM image of an oxide-based thin film sintered body obtained by thermally sintering the molded body formed of oxide particles of FIG. 3, and is also a diagram conceptually illustrating that volumetric shrinkage occurs due to coarsening of particles by photosintering.

FIG. 6 is a conceptual diagram illustrating an all-solid secondary battery including the oxide-based thin film sintered body according to the present disclosure as a solid electrolyte.

Figure 7 is an SEM photograph of the oxide thin film sintered body manufactured in Example 3.

FIGS. 8A to 8C are an image of measuring the surface roughness of oxide-based thin film sintered bodies obtained in Examples 1 and 2 and Comparative Example 1, in which FIG. 8A is an oxide-based thin film sintered body obtained in Example 1, FIG. 8B is an oxide-based thin film sintered body obtained in Example 2, and FIG. 8C is an oxide-based sintered body obtained in Comparative Example 1.

FIG. 9 is a graph illustrating results of measuring the impedance of the oxide-based thin film sintered bodies prepared by the sintering of Examples 1 and 2 and Comparative Example 1.

FIGS. 10A to 10D are photographs of the surfaces of the molded bodies and the oxide-based thin film sintered bodies of Example 2 and Comparative Example 1, in which FIG. 10A is an image of the molded body of Example 2, FIG. 10B is an image of the oxide-based thin film sintered body obtained by photosintering the molded body of Example 2, FIG. 10C is an image of the molded body of Comparative Example 1, and FIG. 10D is an image of the oxide-based sintered body obtained by thermally sintering the molded body of Comparative Example 1.

Figure 11 is a graph showing the results of measuring the oxide thin film sintered bodies of Comparative Example 1 and Example 2 using thermogravimetric analyzers (TGA).

## DETAILED DESCRIPTION

Features of the disclosed technology disclosed in this patent document are described by example embodiments with reference to the accompanying drawings.

The disclosed technology can be implemented in some embodiments to provide an oxide-based thin film sintered body and an oxide-based solid electrolyte sheet for various applications such as an all-solid lithium secondary battery and other devices. In some implementations, an oxide-based thin film sintered body can be formed by performing a thermal process (e.g., photosintering, thermal reacting or annealing) on an oxide-based molded body. In some implementations, an oxide-based solid electrolyte sheet can include the oxide-based thin film sintered body, and an all-solid lithium secondary battery can include the oxide-based solid electrolyte sheet.

Lithium secondary batteries using liquid electrolytes such as organic solvents have a risk of ignition due to electrolyte leakage, and the electrolyte may be decomposed by the electrode reaction and the battery expansion. In addition, a separator that is included in a lithium secondary battery to prevent such issues can render securing the battery's high energy density difficult. The disclosed technology can be implemented in some embodiments to address such issues by providing an all-solid lithium secondary battery to which a solid-state electrolyte is applied.

Solid electrolytes applied to all-solid lithium secondary batteries are mainly classified into sulfide-based, polymer-based, and oxide-based solid electrolytes. The oxide-based solid electrolytes have excellent chemical/thermal stability and mechanical strength and are attracting attention as a next-generation solid electrolyte material.

In some implementations of the disclosed technology, the term "sintering" can be used to indicate compacting or forming a solid mass of material (e.g., powdered material) by pressure or heat. For example, during a sintering process, particles or powdered materials are tightly adhered to each other or solidified by external energy such as heat or light. For example, a "sintering" process may include, after manufacturing a molded body of a predetermined shape using a slurry containing powder and a binder, bringing the powdery particles included in the molded body into close contact through a thermal activation process to form a single mass.

In some implementations of the disclosed technology, the term "photosintering" or "photonic sintering" may be used to indicate sintering that is performed by utilizing heat transfer by an exothermic phenomenon and by a resonance phenomenon between a material's own wavelength region and a wavelength region of light or by light-to-heat conversion that converts absorbed light into heat.

In some implementations, the term "light", which is used in the context of photosintering in the present specification, means electromagnetic radiation in general; "light" of electromagnetic radiation absorbable by the oxide particles may be used, particularly electromagnetic radiation or light in the wavelength region up to 1200nm.

In some implementations, the term "photosintering" can be used to indicate any type of thermal processing of a material layer that is performed using light from a light source. In one example, the thermal processing may include sintering, annealing, or any processing that can convert particles into a solid mass. In some implementations, the photosintering can convert particles into a solid mass without fully melting the particles.

In some implementations, examples of the light source may include a light lamp, a flash lamp, Xenon lamp, flashtube or other light sources that can produce intense light or electromagnetic radiation in a broad range of wavelengths in a region up to 1200nm, in particular in a range of 10 to 1200nm. The light source may emit pulsed light. In one example, the flashlamp or flashtube may produce extremely intense, incoherent, full-spectrum white light for a very short time. In one example, the light source may include a xenon lamp. As such, the photosintering can include a flash lamp annealing (FLA) or a flash lamp sintering (FLS).

In some implementations, when an oxide-based electrolyte thin film sheet of an all-solid-state battery is manufactured by sintering, a molded body formed of a slurry containing oxide powder is sintered at a high temperature, thereby manufacturing an oxide-based electrolyte thin film sheet. In some implementations, such a sintering can be referred to as "thermal sintering" or "high temperature sintering."

Such a thermal sintering is usually performed at a high temperature of 1000°C or higher, and is performed for a long period of time (e.g., 1 to 24 hours) due to limitations in the temperature increase rate. Therefore, during the thermal sintering, a material loss may occur due to volatilization of volatile materials such as lithium, and thus it is difficult to control the density of the sintered body.

On the other hand, in some example methods that can be used to form a metal oxide film, sintering can be performed in a short period of time by a treatment process such as Rapid Thermal Annealing (RTA), laser sintering, or microwave sintering.

RTA sintering may be performed by raising the temperature in a significantly short period of time, and the sintering process may be performed in a short period of time, but substrate deformation or destruction may occur due to thermal shock caused by rapid heating. In addition, the laser sintering is locally performed because the region on which the laser is incident is narrow, and thus, it may take a long time. In addition, in the case of microwave sintering, since the sintering depth is shallow, the sintering may be performed only on the surface of the molded body, and also, substrate selections may be difficult.

The disclosed technology can be implemented in some embodiments to form a thin film sintered body having an ionic conductivity equivalent to or higher than that of a sintered body manufactured by high temperature sintering in some example implementations. In addition, the disclosed technology can be implemented in some embodiments to address issues occurring during long-term sintering at high temperature.

An oxide-based thin film sintered body based on some embodiments may be manufactured by photosintering a molded body manufactured using a slurry containing oxide particles. In an embodiment, a sintered body may be manufactured by controlling the sintering operation in a short period of time by performing photosintering, and good interparticle contact may be maintained while suppressing a particle coarsening phenomenon occurring in the oxide-based sintered body obtained in the long-term high-temperature sintering process in some example implementations.

The slurry for producing the molded body contains oxide particles. In some implementations, the oxide particle may be an oxide particle containing a lithium element. In one example, the oxide particles may be lithium conductive oxide-based particles. The lithium conductive oxide-based particles may be compound particles containing an oxygen element and having lithium ion conductivity, in a powdered form, and may be lithium conductive oxide-based particles containing at least one or more other metal elements such as zirconium (Zr), phosphate ($PO_4$), and titanium (Ti) in addition to a lithium element, and may also include two or more types of oxide particles.

For example, the lithium conductive oxide particles may have a structure of Garnet, NASICON, Perovskite, LiPON, LISICON, and Thio-LISICON (which may hereinafter also be referred to as garnet-type oxide, NASICON-type oxide, perovskite-type oxide, LiPON-type oxide, and thio-LISICON-type oxide, respectively), and also, although it is not particularly limited, the lithium conductive oxide particles may include $Li_6La_2CaTa_2O_{12}$, $Li_6La_2ANb_2O_{12}$(where A is Ca or Sr), $Li_2Nd_3TeSbO_{12}$, $Li_3BO_{2.5}N_{0.5}$, $Li_9SiAlO_8$, $Li_{1+x}Ti_{2-x}Al_xSi_y(PO_4)_{3-y}$(where $0 \leq x \leq 1$, $0 \leq y \leq 1$), $LiAl_xZr_{2-x}(PO_4)_3$(where $0 \leq x \leq 1$, $0 \leq y \leq 1$), or $LiTi_xZr_{2-x}(PO_4)_3$(where, $0 \leq x \leq 1$, $0 \leq y \leq 1$).

The garnet-type oxide includes lithium, lanthanum, zirconium, and oxygen, and may be an oxide represented by a chemical formula of $Li_{7-3x+y-z}A_xLa_{3-y}B_yZr_{2-z}M_zO_{12}$. In the above formula, $0 \leq x \leq 1$, $0 \leq y \leq 1$, and $0 \leq z \leq 1$, and also, A is a substitutional doping element of Li, B is a La substitution doping element, and M is a Zr substitution doping element. The A and B may be respectively independently at least one selected from the group consisting of aluminum (Al), gallium (Ga), barium (Ba), magnesium (Mg), calcium (Ca), strontium (Sr), potassium (K), cerium (Ce) and rubidium (Rb). The M may be at least one selected from the group consisting of molybdenum (Mo), tungsten (W), antimony (Sb), yttrium (Y), niobium (Nb), and tantalum (Ta). The garnet-type oxide is not particularly limited, but may be, for example, $Li_7La_3Zr_2O_{12}$, $Li_5La_3Nb_2O_{12}$, $Li_5La_3Ta_2O_{12}$ or $Li_6La_2BaTa_2O_{12}$.

The oxide of the NASICON structure may be at least one kind selected from the group consisting of LAGP ($Li_{1+x}Al_xGe_{2-x}(PO_4)_3(0 \leq x \leq 1)$), LATP ($Li_{1+x}Al_xTi_{2-x}(PO_4)_3(0 \leq x \leq 1)$) and LZP ($Li_{1+4}xZr_{2-x}(PO_4)_3(0 \leq x \leq 0.4)$).

The perovskite-type oxide may include, for example, lithium lanthanum titanate or lithium lanthanum niobate ($Li_xLa_{(1-x)/3}NbO_3)(0 \leq x \leq 1)$.

In some implementations, the lithium conductive oxide-based particles may be at least one compound selected from a lithium lanthanum zirconium oxide (LLZO)-based compound, a lithium lanthanum titanate oxide (LLTO)-based compound, a lithium aluminum germanium phosphate (LAGP)-based compound, and a lithium aluminum titanium phosphate (LATP)-based compound.

In some implementations, the lithium conductive oxide-based particle may be a lithium lanthanum zirconium oxide (LLZO)-based compound represented by the chemical formula $Li_7La_3Zr2O_{12}$ and having a garnet structure. When a compound of the above-described type, in detail, an LLZO-based compound, is applied as the lithium conductive oxide-based particle, an oxide-based solid electrolyte sheet having characteristics such as excellent ionic conductivity, stability with lithium metal, and a wide potential window range may be prepared.

In some implementations, materials of all colors except perfect white that may reflect all light have light absorbing properties, and in some embodiments of the disclosed technology, oxide particles having light absorbing properties in the wavelength range of 10 to 1200 nm is included. When the light of the above wavelength is irradiated, the light other than the reflected light and the transmitted light is absorbed by the oxide particles and generates heat, thereby increasing the temperature of the oxide particles, and photosintering may increase the temperature to a high temperature in a short time at a heating rate of $10^4$ to $10^7$K/sec.

When light in the above wavelength range is irradiated repeatedly, for example, hundreds of times, the temperature of the material may increase due to heat generation and the increased temperature may be maintained to obtain a sintering effect. In this regard, photosintering may obtain the same sintering effect as in the high-temperature sintering process based on some example implementations, photosintering may be performed for a short period of time, thereby providing a sintering effect of oxide particles. Therefore, coarsening of the particles due to volume shrinkage in a high-temperature sintering process based on some example implementations conducted for a long time may be suppressed, and it is possible to avoid separation from the substrate when the shrinkage rate is relatively high. In addition, unlike the high-temperature sintering based on some example implementations, photosintering does not cause heating of the substrate itself, which may prevent deformation or destruction of the substrate.

The oxide particle may also have an energy band gap of 0.1 to 15 eV in terms of utilizing an energy transfer phenomenon occurring when electrons in a valance band receive energy and move to a conduction band.

The average particle size (D50) of the oxide particles may be 1 $\mu$m or less, for example, 750 nm or less, for example, 600 nm or less, for example, 500 nm or less.

The slurry for preparing the molded body may include a binder together with oxide particles. The binder properly binds the oxide-based particles and improves the adhesion of the slurry to the substrate when a substrate is used, and is not particularly limited. For example, polyacrylic resin, ethyl-cellulose, methyl-cellulose, polyvinyl butyral resin, polyvinylidene fluoride, carboxylic acid alkyl esters and ethylenically unsaturated carboxylic acid monomers may be provided, and of course, any one thereof may be used, or two or more thereof may be mixed and used.

The binder may be included in an amount of, for example, 0.1 to 30% by weight based on the total weight of the solid content, but is not limited thereto.

The slurry may also contain a solvent. The solvent is not particularly limited, but hydrocarbon-based solvents such as alcohols, ketones, amides, esters, and ethers may be used. The amount of the solvent used is not particularly limited, but may be used so that, for example, the weight ratio of a solid and a solvent is 30 to 40: 60 to 70 with respect to the total weight of the slurry.

The slurry based on some embodiments of the disclosed technology may further include colored oxide particles. The term "colored-oxide particle" may be used to indicate oxide particles having all colors except perfect white (e.g., when the L value according to the CIELAB colorimeter is 100) reflecting all light in theory. Therefore, the term "colored" may be used to indicate the L value according to the CIELAB colorimeter is less than 100.

The colored oxide particles capable of absorbing light energy in the visible ray region, which is a wavelength region of 380 to 780 nm, may be used. In an embodiment, when the colored oxide particles are included, in the photosintering process, light in the above region may be more effectively absorbed, and therefore, photosintering may proceed more smoothly. Therefore, an oxide-based thin film sintered body that is dense and has excellent durability may be manufactured.

In addition, during the photosintering process, the absorption rate of light absorbed by the molded body may be controlled by adjusting the characteristics such as the type and content of these colored oxide particles, and thus, the physical properties of the oxide-based thin film sintered body produced by photosintering may be freely adjusted as needed.

In some implementations, the colored oxide particles may be included in an amount of 0.1 to 10% by weight based on the total amount of oxide-based particles. In one example, the colored oxide particles may be included in an amount of 0.5 to 5% by weight based on the total amount of oxide-based particles. In another example, the colored oxide particles may be included in an amount of 0.7 to 2% by weight based on the total amount of oxide-based particles. When the content of the colored oxide particles is within the above range, photosintering may be performed without affecting oxide particles such as lithium conductive oxide-based particles that are substantially involved in properties such as ion conductivity of the produced oxide-based thin film sintered body, and physical properties such as durability of the oxide-based thin film sintered body may be further improved.

As for the colored oxide particles, using a colored oxide with low brightness may further improve light absorption characteristics, and for example, one or more types may be selected and used from oxides of transition metal elements or lanthanide elements. In some implementations, oxide particles containing at least one selected from the group consisting of vanadium (V), tungsten (W), iron (Fe), bismuth (Bi), zinc (Zn), cobalt (Co), manganese (Mn), copper (Cu), cesium (Ce), arsenic (As), selenium (Se), antimony (Sb), chromium (Cr), nickel (Ni), niobium (Nb), molybdenum (Mo), ruthenium (Ru), rhodium (Rh), palladium (Pd), praseodymium (Pr), neodymium (Nd), tebium (Tb) and erbium (Er), or oxide particles containing at least one of the above elements and lithium, may be used.

A molded body may be manufactured using the slurry as described above. The molded body may be formed in a predetermined shape by applying the slurry on a substrate. In this case, the substrate may be appropriately selected in flexibility, shape, type of the substrate in consideration of the slurry characteristics and the photosintering process to be performed thereafter, and the substrate is not particularly limited, and may be, for example, a current collector in the form of a copper (Cu) or aluminum (Al) foil, or may be a negative electrode or a positive electrode for an all-solid lithium secondary battery.

A molded body may be manufactured by drying the slurry after coating the slurry on a substrate. The drying is not particularly limited, and may be performed by, for example, a convection oven or others.

In some implementations, the drying may be performed at 50 to 200°C, in one example, at 80 to 120°C. In addition, the drying may be performed for 0.5 hours to 5 hours, in one example, for 1 hour to 3 hours.

In some example implementations, a certain high-temperature sintering cannot produce a sintered body of constant quality, and thus, it is necessary to apply an additional process to obtain a required thickness through a process such as polishing after manufacturing a thick bulk. However, when the photosintering is applied, since a thin-film sintered body may be obtained without an additional process, a molded body in which a sintered body having a required thickness may be obtained may be manufactured as needed. Therefore, the thickness of the molded body formed by applying the slurry is not particularly limited, and the thickness of the molded body may be adjusted such that the thickness of the sintered body obtained by photosintering is 300 $\mu$m or less.

For example, the molded body may be manufactured in various thicknesses depending on the viscosity of the slurry and the oxide particle size, and a molded body having a thickness of, for example, 10 to 100 $\mu$m may be manufactured. Furthermore, a molded body may be manufactured with a thickness of 10 $\mu$m or less and may also be manufactured with a thickness of 100 $\mu$m or more. Depending on the light absorption rate, a molded body that may obtain a sintered body with a thickness of 300 $\mu$m or less may be manufactured.

The method of applying the slurry on the substrate is not particularly limited, and the slurry may be applied by a method such as bar coating, casting, or spraying. The slurry may be applied on a substrate at a loading weight (LW) of 50 to 5000 mg/cm$^2$.

A sintered body may be produced by applying a photosintering process to the molded body as described above. As described above, the molded body includes oxide particles, and may thus be subjected to photosintering, and the photosintering efficiency may be improved when colored oxide particles are further included.

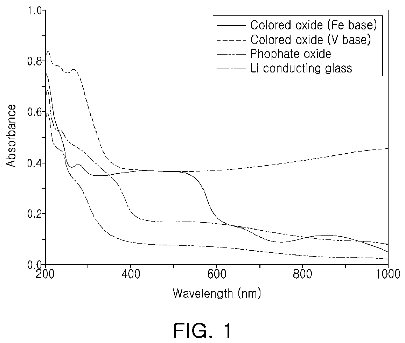

This is shown in FIG. 1. FIG. 1 is a graph illustrating the results of analyzing absorbance in respective wavelength regions for lithium conductive glass, lithium conductive oxide particles containing iron or vanadium as colored oxide particles, and phosphate oxide. The absorbance may be analyzed by UV-Vis equipment (V-770 manufactured by Jasco).

In the case of Li conductive glass, the light transmittance is relatively high due to the nature of the glass, and thus, the absorbance represents a low value in the visible ray region. The material of the electrolyte mixed with phosphate oxide shows a similar color to HSV (h, s, v) (60°, 10%, {{{v}}}%) and shows a higher absorbance value in the entire region than the glass electrolyte. In the case of vanadium oxide, it exhibits a black color, and when mixed with a solid electrolyte, it exhibits a light gray color and exhibits high absorbance. On the other hand, iron oxide exhibits a dark red color and exhibits significantly high absorbance in a wavelength region of 600 nm or less.

As such, it can be seen that different absorbances are exhibited for respective wavelength regions according to the color of the colored oxide. As can be seen from FIG. 1, iron-based colored oxide, vanadium-based colored oxide, phosphate oxide, and lithium conductive glass all have light energy absorption in the 10 to 1200 nm wavelength region, and may absorb light energy, in one example, in the visible ray region of 380 to 780 nm wavelength region.

Therefore, when a colored oxide having a property of absorbing light energy in a wavelength range of 10 to 1200 nm, in one example, 380 to 780 nm is added together, an oxide sintered body may be prepared by performing photosintering using light energy absorption.

The photosintering based on some embodiments of the disclosed technology may produce a sintered body having connection points between particles similarly to the thermal sintering based on some example implementations, by repeatedly irradiating light of 10 to 1200 nm wavelength irradiated for a short period of time of $\mu$s to ms, multiple times for a time of about 1 ms to 10 minutes.

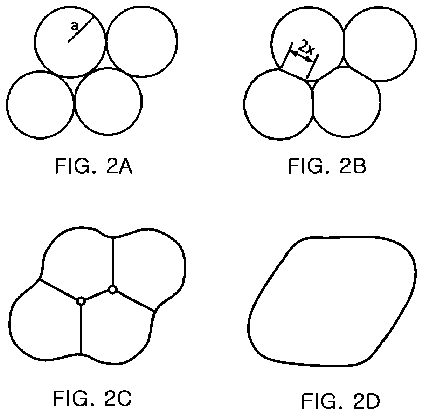

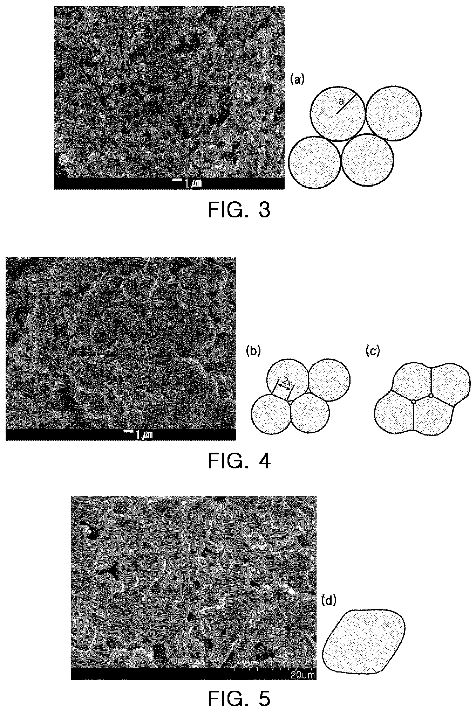

In the case of sintering the molded body using the photosintering, a sintered body may be obtained in a short period of time, and furthermore, the degree of sintering of the sintered body may be adjusted. In this case, the degree of sintering may be expressed as the degree of connection point between the particles, and may be described in detail with reference to FIGS. 2A to 2D and FIGS. 3 to 5. FIG. 2 is a view conceptually illustrating the change in the contact state between oxide-based particles according to the progress of photosintering, and FIGS. 3 to 5 illustrate SEM images of the sintered body corresponding to the change in the contact state of FIG. 2.

During the sintering process, the grain boundary (the boundary where particles are in contact with each other) forms a point contact in the initial stage of oxide (FIG. 2A and FIG. 3), and as photosintering proceeds, the contact area gradually expands to form surface contact (FIGS. 2B and 2C and 4), and eventually the particles become coarse (FIGS. 2D and 5).

For example, in the case of point contact as illustrated in FIGS. 2A and 3, it is a simple contact and relatively great resistance is provided during movement of ions.

On the other hand, as illustrated in FIGS. 2B and 2C and FIG. 4, grain boundaries (GB) are generated as the sintering proceeds through photosintering, and the contact area increases due to the surface contact form. According to the expansion of the contact area between the particles, the pores between the particles decrease, resulting in volume shrinkage of about 3% or less or about 10% or less, and the resistance of the ion movement path is lowered, enabling fast ion conduction, and durability according to densification increases, thereby maintaining the sheet shape.

However, as illustrated in FIGS. 2D and 5, if the contact area between particles excessively increases and the particles become coarse as sintering continues, for example, in a case in which the volumetric shrinkage increases to around 20%, problems such as peeling from the substrate and/or cracking of the thin film may occur, resulting in deterioration of function.

Therefore, when the oxide molded body is sintered by applying the photosintering process according to an embodiment of the disclosed technology, by properly controlling the sintering process or others while preventing excessive coarsening and peeling due to volume shrinkage, a surface contact state between particles may be maintained to secure a dense structure and ion movement path and improve ionic conductivity.

Furthermore, high-speed sintering is possible when a light sintering process is applied, and a particle shape as illustrated in FIG. 2B may be formed by controlling the shape of the particles according to the control of the degree of sintering. In addition, the particles may be appropriately coarsened as needed in consideration of the flexibility and shape of the substrate for example.

An oxide-based thin film sintered body obtained by photosintering according to an embodiment of the disclosed technology includes a sintered body of oxide particles included in the molded body, and may also include a sintered body of colored oxide particles that may be added as needed. The colored oxide particles may be included in an amount of 0.1 to 10% by weight based on the total amount of the sintered body of the oxide particles and the sintered body of the colored oxide particles.

The addition amount of the colored oxide particles included in the sintered body is not necessarily limited, but may be determined by measuring the fraction of the colored oxide particles in the total oxide-based particles by, for example, Inductively Coupled Plasma Mass Spectrometry (ICP-MS).

Therefore, the oxide-based thin film sintered body based on some embodiments of the disclosed technology includes oxide particles having an energy band gap of 0.1 to 15 eV and has a characteristic of absorbing light energy in a wavelength range of 10 to 1200 nm.

For example, known LLZO has an energy band gap of 4.4 eV, $Fe_2O_3$ has a known energy band gap of 1.4 eV, and phosphate oxide has an energy band gap of about 2.6 to 2.8 eV.

The photosintered oxide-based particles are obtained by photosintering oxide-based particles, and may have different shapes, colors, and inter-particle connection structures. In addition, when the colored oxide particles are included in the molded body, the shapes, colors, and inter-particle connection structures of the particles may be different from each other by photosintering the colored oxide particles. For example, the colored oxide particles may not exist because the shapes thereof are changed by photosintering, and the oxide-based particles may be doped with colored oxides, and a portion of the metal elements of the colored elements may be substituted and changed into a different chemical structure.

The oxide-based thin film sintered body is manufactured by photosintering a molded body in a state of being positioned on a substrate, and a portion of elements included in the substrate may diffuse into the oxide-based thin film sintered body, and therefore, the oxide-based thin film sintered body may contain elements included in the substrate. For example, the element of the substrate included in the oxide-based thin film sintered body may be 9 at% or less, for example, 5 at% or less, 3 at% or less, 1 at% or less, 0.5 at% or less, 0.01 at% or more, or 0.001 at % or more.

When the molded body is formed of a slurry containing a binder, the oxide of the oxide-based thin film sintered body may contain a carbon (C) element as a burning residue of the binder. The content of carbon (C), which is the burning residue of the binder, is not particularly limited, but may be, for example, 1 at% or more, 10 at% or more, or 20 at% or more, and may be 45 at% or less, 40 at% or less, or 30 at% or less.

When the content of elements and/or binder burning residues included in the substrate is within the above range, the oxide-based thin film sintered body is manufactured through a smooth photosintering process, and element diffusion between the substrate and the sheet is suppressed, and as a result, the formation of an interface between the substrate and the sheet and the increase in resistance are substantially suppressed.

The element distribution in the oxide-based thin film sintered body may be determined by quantitatively analyzing the content of the added material through a surface analysis method such as Energy Dispersive x-ray Spectroscopy (EDS) or Electron Energy Loss Spectroscopy (EELS). In some implementations, the surface of the oxide-based thin film sintered body may be analyzed by performing EDS analysis in the thickness direction (i.e., a surface parallel to the surface in contact with the substrate).

An oxide-based thin film sintered body obtained by photosintering according to an embodiment has a uniform surface and does not require an additional processing process. Therefore, an oxide-based thin film sintered body having a required thickness may be obtained and may be formed as a thin film. In some implementations, the thickness of the oxide-based thin film sintered body may be 300 $\mu$m or less. In some implementations, the thickness of the oxide-based thin film sintered body may be 10 $\mu$m or more, 30 $\mu$m or more, 50 $\mu$m or more or 70 $\mu$m or more, and may be 300 $\mu$m or less, 250 $\mu$m or less, 200 $\mu$m or less, 150 $\mu$m or less or 100 $\mu$m or less. In some implementations, the thickness of the oxide-based thin film sintered body may be greater than or equal to 10 $\mu$m and less than or equal to 100 $\mu$m. When the thickness of the oxide-based thin film sintered body is within the above range, the ion conductivity as a thin film is excellent, and relatively higher energy density may be secured when applied as a solid electrolyte sheet in an all-solid lithium secondary battery.

The oxide-based thin film sintered body may be applied without particular limitations in width, length, and others.

Therefore, a sintered body having a relatively large area may be manufactured, compared to an oxide-based thin film sintered body manufactured by an existing high-temperature sintering process, and thus productivity and economic efficiency of manufacturing an oxide-based solid electrolyte sheet may be further improved.

An oxide-based thin film sintered body obtained by photosintering according to an embodiment may be manufactured as a thin film, and does not require a separate process such as polishing to obtain a sintered body having a required thickness.

Therefore, the oxide-based thin film sintered body implemented based on some embodiments of the disclosed technology has a high surface roughness, and for example, may have a two-dimensional surface roughness Ra of 0.1 to 3 $\mu$m, preferably a two-dimensional surface roughness Ra of 1.8 $\mu$m or lower, more preferably an Ra of 1.5 $\mu$m or lower, and a three-dimensional surface roughness Sa of 1 to 10 $\mu$m, preferably a three-dimensional surface roughness Sa of 5 $\mu$m or lower, more preferably an Sa of 2.25 $\mu$m or lower. In some implementations, the oxide-based thin film sintered body may have Ra of 0.25 to 2.55 $\mu$m, preferably an Ra of 0.50 to 1.8 $\mu$m, 0.75 to 1.50 $\mu$m or 0.8 to 1.25 $\mu$m and Sa of 1.10 to 9.80 $\mu$m, preferably an Sa of 1.2 to 5.0, or 1.25 to 2.25. Due to the contact between the oxide particles by the photosintering, the curvature of the surface is partially reduced compared to the curvature provided by the particles themselves before sintering, and as a result, the surface roughness in the above range may be obtained.

On the other hand, the oxide-based thin film sintered body implemented based on some embodiments of the disclosed technology has a contact area equal to or greater than point contact between oxide particles in the sintered body and oxide particles adjacent thereto, and forms, for example, surface contact. In the contact area A where the two particles are in contact with each other, when the radius of the major axis of the contact surface generated by the contact between the oxide particle and the adjacent oxide particle is r, and the radius of the minor axis of the contact surface is a, the contact area A may be represented by $\pi x a$ and may have a value greater than $3\pi r^2$. In this case, the x has a relationship of $0.1r \leq x \leq 3r$. The contact area A between oxide particles means that the oxide particles are not simply in physical contact with each other, but that the shape of the initial particle is modified and physical and chemical contact occurs, therefore, the sintered body can maintain an appropriate level of porosity between oxide particles and can also have crack resistance property.

As illustrated in FIGS. 2B and 2C, the oxide-based thin film sintered body according to the present embodiment may have pores between particles while having surface contact, and may have a porosity of 1 to 70%, and may be structurally unstable if the porosity exceeds 70%. The porosity may be, for example, 1% or more, 3% or more, 5% or more, 7% or more, 10% or more, 15% or more, or 20% or more, and may also be 70% or less, 65% or less, or 60% or less, 55% or less, 50% or less, or 45% or less. The porosity may be measured by using the Image J program for the SEM cross section of the oxide-based thin film sintered body or using a porosimeter for the oxide-based thin film sintered body.

On the other hand, the oxide-based thin film sintered body based on an embodiment includes lithium element, and may have a peak at a binding energy value of 50 to 60 eV as a result of XPS analysis. The XPS analysis results may have been measured using X-ray Al k alpha, 1486.68eV, and 900$\mu m$ beam size, and in CAE Mode. At this time, the pass energy may be 150 eV (survey scan) and 20 eV (narrow scan).

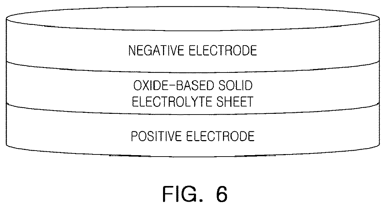

The oxide-based thin film sintered body may be an oxide-based solid electrolyte sheet, and in some embodiments of the disclosed technology, an all-solid lithium secondary battery including the oxide-based solid electrolyte sheet is provided. The structure of all-solid lithium secondary battery is schematically shown in FIG. 6. As can be seen from FIG. 6, the all-solid lithium secondary battery may include a positive electrode, a negative electrode and the oxide-based solid electrolyte sheet between the positive electrode and the negative electrode.

The positive electrode is not particularly limited, and an example of a positive electrode active material may include a lithium-transition metal oxide such as lithium cobalt oxide ($LiCoO_2$), lithium manganese oxide ($LiMn_2O_4$), or lithium nickel oxide ($LiNiO_2$), or a lithium-transition metal complex oxide in which a portion of these transition metals are substituted with other transition metals.

For example, the lithium-transition metal oxide includes nickel (Ni) and may further include at least one selected from the group consisting of cobalt (Co) and manganese (Mn). For example, examples of the positive electrode active material may include an NCM-based positive electrode active material, Mn-rich positive electrode active material, or LLO (Li rich layered oxides, Over Lithiated Oxides, Over-lithiated layered oxide, OLO, LLOs)-based positive electrode active materials. For example, the lithium-transition metal oxide may have a structure represented by Formulas 1 to 3 below.

$$[\text{Formula 1}] \qquad Li_aNi_bM_{1-b}O_2$$

In Formula 1, $0.9 \leq a \leq 1.2$, $b \leq 0.5$, and M is at least one of Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba and Zr. In some implementations, in Formula 1, $0.95 \leq a \leq 1.08$ may be satisfied, and b may be 0.6 or more, 0.8 or more, greater than 0.8, 0.9 or more, or 0.98 or more. In some implementations, in Chemical Formula 1, M may include Co, Mn, or Al, and in one example, M may include Co and Mn, and optionally further include Al.

[Formula 2]  $pLi_2MnO_3 \cdot (1-p)LiqJOz$

In Formula 2, $0<p<1$, $0.9 \leq q \leq 1.2$, and J may be at least one selected from the group consisting of Mn, Ni, Co, Fe, Cr, V, Cu, Zn, Ti, Al, Mg and B.

[Formula 3]  $Li_{1+x}M_{1-x}O_2$

In Formula 3, $0 \leq x \leq 0.4$, and M is at least one of Na, Mg, Ca, Y, Ti, Zr, Hf, V, Nb, Ta, Cr, Mo, W, Ni, Mn, Co, Fe, Cu, Ag, Zn, B, Al, Ga, C, Si, Sn, Ba and Zr. In some implementations, in Chemical Formula 3, M may include Ni, Co, Mn, or Al, and in one example, include Ni, Co and Mn, and optionally may further include Al.

In addition, the positive electrode active material may be a lithium iron phosphate (LFP)-based positive electrode active material represented by the chemical formula of $LiFePO_4$.

In addition, the lithium-transition metal oxide may be a secondary particle formed into a substantially single particle by assembling or aggregating a plurality of primary particles, or may be in the form of a single particle. The single particle form may mean, for example, excluding secondary particles formed into substantially one particle by assembling or aggregating a plurality of primary particles (e.g., more than 10). However, the single particle form does not exclude that the single particles in the range of 2 to 10 particles are attached or closely attached to each other to have a substantially single body form (e.g., a structure converted into a single particle). In some embodiments, the positive electrode active material may include both a secondary particle form and a single particle form.

The negative electrode is not particularly limited, and examples of the negative electrode active material may include carbon-based active materials such as artificial graphite and natural graphite, silicon-based active materials such as silicon oxide (SiOx; $0<x<2$), Si-C composite and pure Si, and metals such as lithium metal and lithium-metal alloys.

On the other hand, the all-solid lithium secondary battery may be a non-negative electrode secondary battery, and for example, may be a battery in which a negative electrode active material layer is not formed on the negative electrode current collector during the battery assembly process. When the non-negative electrode lithium secondary battery is initially charged or initially charged, the main positive electrode active material and the sacrificial positive electrode active material are delithiated, and lithium ions generated from the positive electrode active material are reduced on the negative electrode current collector to form a lithium layer of a lithium metal layer or a solid lithium layer.

A method of manufacturing the all-solid lithium secondary battery is not particularly limited, but after coating a slurry containing a negative electrode or positive electrode active material on a current collector, a negative electrode or a positive electrode is prepared through a drying and rolling process, respectively, and a slurry containing colored oxide particles is applied to the negative electrode or positive electrode and then dried, to form an oxide-based thin film sheet. The all-solid lithium secondary battery may be manufactured by performing a photosintering process on the formed oxide-based thin film sheet to form an oxide-based solid electrolyte sheet.

When the all-solid lithium secondary battery includes the oxide-based solid electrolyte sheet described above, there is no risk of ignition due to leakage of the electrolyte, and excellent performance such as high energy density may be obtained.

Examples

Hereinafter, some embodiments of the disclosed technology will be described in more detail by way of example and not limitation.

**Example 1**

A slurry was prepared by mixing lithium lanthanum zirconium oxide (LLZO; $Li_7La_3Zr_2O_{12}$) particles and a binder solution (441 by Electroscience Lab., Ferro corporation), with PVB based polymer dispersed in $\alpha$-terpineol solvent in a weight ratio of 4:1.

The slurry was cast on a copper foil having a thickness of 20 $\mu$m at a weight (LW) of 2000 mg/cm$^2$ and then dried in a convection oven at 100°C for 2 hours to prepare an oxide-based molded body having a thickness of about 60 $\mu$m.

A specimen was prepared by cutting the prepared oxide-based molded body into a size of 0.5 cm $\times$ 0.5 cm.

After loading the specimen of the oxide-based molded body into photosintering equipment (Novacentrix Pulse-Forge Invent), photosintering was performed under the photosintering conditions as illustrated in Table 1 below to prepare an oxide-based thin film sintered body.

[Table 1]

| Photosintering Conditions | | |
|---|---|---|
| Conditions constituting one pulse | Voltage | 300 V |
| | Light irradiation time per pulse (On-time) | 3000 $\mu$s |
| | Pulse Interval (Off-time) | 60% |
| | Cycle count | 10 cycles |
| Operating conditions | Fire rate | 25 Hz |
| | Numbers of pulse iterations | 250 repetitions |
| | Irradiated light energy | 75 J/s·cm$^2$ |

**Example 2**

A slurry was prepared in the same manner as in Example 1, except that $Fe_2O_3$ as colored oxide particles was added and mixed at 1% by weight based on the weight of the lithium lanthanum zirconium oxide (LLZO) particles, an oxide-based molded body was prepared, and a specimen was prepared.

In addition, the oxide-based thin film sintered body was prepared by photosintering the specimen of the oxide-based molded body in the same manner as in Example 1.

**Example 3**

A slurry was prepared in the same manner as in Example 2, except that the average particle size of lithium lanthanum zirconium oxide (LLZO) was 500 nm or less and the particle shape was spherical, an oxide-based molded body was prepared, and a specimen was prepared.

In addition, a specimen of the oxide-based molded body was light-sintered in the same manner as in Example 1 to produce an oxide-based thin film sintered body.

**Comparative Example 1**

LLZO of the same composition was used as a mother powder on the surface of the molded body, which was substantially the same as the oxide-based molded body obtained in Example 1, except that the thickness was different from that of the oxide-based molded body obtained in Example 1, so that the surface and side surfaces of the specimen were covered so as not to be directly exposed to the air, to be loading into an electric furnace, and then, the temperature was raised to 1150°C and maintained for 12 hours to sinter to prepare an oxide-based thin film sintered body.

**Physical property analysis**

The physical properties of the sintered bodies of Examples 1 and 2 and Comparative Example 1 were measured, respectively, and the results are illustrated in Table 2.

[Table 2]

| | Example 1 | Example 2 | Comparative Example 1 |
|---|---|---|---|
| Sintered body thickness | 40$\mu$m | 40$\mu$m | 500$\mu$m |
| Surface roughness (Ra) | 1.243 | 0.864 | 1.998 |
| Surface roughness (Sa) | 2.189 | 1.321 | 2.271 |
| Sintered body porosity | 40% | 35% | 25% |
| Contact area between particles ($\mu$m$^2$) | 0.000327 | 0.0293 | 0.196 |
| Ionic conductivity ($\times 10^{-4}$S/cm) | 0.198 | 1.7 | 2.36 |

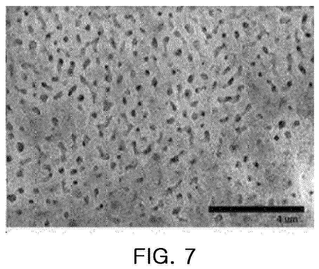

Meanwhile, an SEM photograph of the oxide-based thin film sintered body prepared in Example 3 is shown in FIG. 7. From Fig. 7, it can be seen that contact between nano-sized particles is made uniformly to form a three-dimensional porous structure.

**Thickness**

The thickness of the sintered body was measured with a micrometer and is illustrated in Table 2. As can be seen from Table 2, in Examples 1 and 2, an oxide-based thin film sintered body having a thickness of about 40 $\mu$m was obtained, and the thickness of the sintered body of Comparative Example 1 was obtained by measuring a thickness of the sintered body after removing the mother powder using 200 mesh paper sandpaper from the surface of the prepared sintered body, and it was confirmed to have a thickness of about 500 $\mu$m.

**Measurement of Surface roughness Ra and Sa**

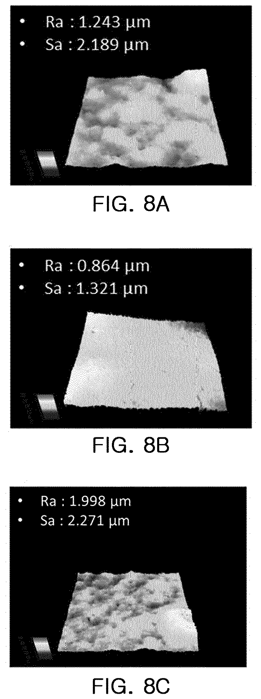

The surface roughness illustrated in Table 2 is represented by measuring the surface roughness Ra and Sa after implementing images using two confocal optical systems in a non-contact manner in which laser is irradiated on the surface of the sample using Olympus' OLS4100. The obtained images are illustrated in FIGS. 8A to 8C.
From Table 2 and FIGS. 8A-8C, the sintered body sheets of Examples 1 and 2 were obtained by uniformly casting the slurry and photosintering in a short period of time, Ra and Sa illustrate small values, indicating a smooth surface could find out. It was found that Ra and Sa exhibited small values, indicating a smooth surface, compared to the sintered body obtained by thermal sintering. It is evaluated that the volatilization of lithium ion is low from such a low surface roughness value, and this may be regarded to be due to the small reaction with air during the sintering process according to photosintering.
On the other hand, the sintered body of Comparative Example 1 was obtained by thermal sintering at a high temperature, and it is required to cover with parent powder to suppress lithium volatilization on the surface of the molded body during the sintering process. By removing this mother powder, the surface of the sintered body was uneven, representing a high surface roughness value. From the high surface roughness value, it was evaluated that the sintered body by thermal sintering requires a separate grinding process for surface uniformity.

**Porosity of Sintered body**

Porosity analysis was performed on the sintered bodies prepared in Examples 1 and 2 and Comparative Example 1 by Image J software.
From the porosity values of the sintered bodies described in Table 2, it was confirmed that the sintered bodies of Examples 1 and 2 had a higher porosity than a porosity of Comparative Example 1 by thermal sintering. Such a high porosity may be seen as indicating that the particle shape is maintained and the particle coarsening phenomenon is not large.

**Ionic Conductivity**

The ionic conductivity was measured based on the following Equation (2), and illustrated in Table 2.

$$\text{Ion conductivity} = \frac{l}{A \cdot R} (S/cm) \quad (2)$$

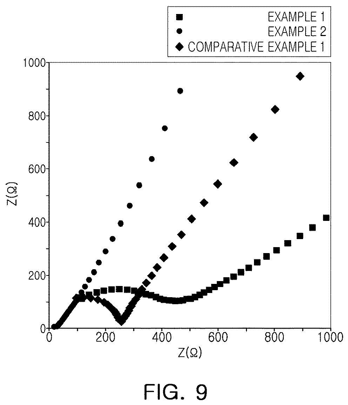

In Equation (2), l represents the specimen thickness, A represents the specimen area, and R represents the resistance value, and the resistance value was measured using a VMP-300 impedance meter.
The results of measuring the impedance of the sintered bodies of Examples 1 and 2 and Comparative Example 1 are illustrated in FIG. 9. As can be seen from FIG. 9, the sintered body of Example 1 without the addition of the colored oxide exhibited a higher resistance value than a resistance value of the sintered body of Example 2 with the addition of the colored oxide.
From this, the ionic conductivity was calculated by the above Equation (2) for the same sample size, and the results are illustrated in Table 2. As can be seen from Table 2 and FIG. 9, relatively low ionic conductivity was exhibited when the resistance value was high.
On the other hand, from Table 2, it can be seen that the ionic conductivity values of Examples 1 and 2 are lower than an ionic conductivity value of Comparative Example 1. In some implementations, Example 1 represents a big difference compared to Example 2, and this result is a result obtained by performing photosintering without adding a colored oxide, unlike Example 2. However, Example 1 has an ion conductivity value despite representing a high porosity of 40%, exhibiting that there is a sintering effect approximately beyond around simple contact between particles. Therefore, it can be seen that the sintered body by photosintering may also obtain an ionic conductivity effect, and furthermore, a sintered body having relatively higher ionic conductivity may be manufactured by adjusting the photosintering conditions.

In addition, although the sintered body of Example 2 has a high porosity of 35% compared to the sintered body of Comparative Example 1 obtained by thermal sintering, it can be confirmed that it exhibits an ionic conductivity comparable to that of the sintered body obtained by thermal sintering, and thus, effective inter-particle contact is obtained.

**Sintered body surface characteristics**

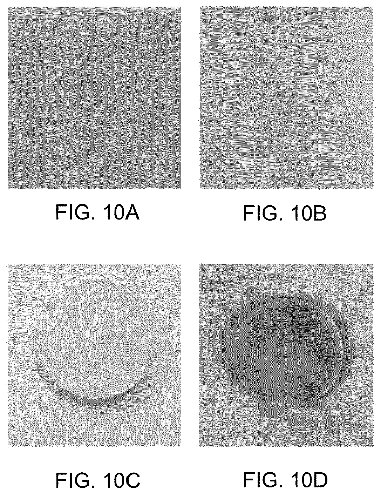

The oxide-based molded body specimen before photosintering and an oxide-based thin film sintered body obtained after photosintering in Example 2, and the oxide-based molded body specimen before thermal sintering and the oxide-based sintered body obtained after thermal sintering in Comparative Example 1, are captured on the surfaces thereof, and the images are illustrated in FIGS. 10A to 10D, respectively.

FIG. 10A is an image of the molded body of Example 2 before photosintering, FIG. 10B is an image of the oxide-based thin film sintered body obtained by optically sintering the molded body of Example 2, FIG. 10C is an image of the molded body of Comparative Example 1 before thermal sintering, and FIG. 10D is an image of the oxide-based sintered body obtained by thermally sintering the molded body of Comparative Example 1.

As can be seen from FIGS. 10A and 10B, the molded body of Example 2 had a color other than white, including colored oxide, and the light-sintered oxide-based thin film sintered body exhibited a white color as the colored oxide was sintered by photosintering.

On the other hand, from FIGS. 10C and 10D, the molded body not containing the colored oxide exhibited a white color, but the oxide-based thin film sintered body by thermal sintering reacted with carbon dioxide in the air during the thermal sintering process to produce lithium carbonate, thereby forming an impurity film or causing volatilization of the lithium carbonate. Therefore, the color was changed by surface reaction and cracks were observed on the surface of the sintered body, indicating non-uniform formation.

When the oxide-based sintered body by thermal sintering of Comparative Example 2 exhibited an oversintering pattern due to coarsening of the particles, it was confirmed that cracks occurred at the edges and surfaces of the oxide-based sintered body due to the development of grain boundaries more than necessary. Such cracks are caused by the concentration of mechanical stress on the grain boundaries due to the development of grain boundaries between coarse grains due to oversintering.

In some implementations, cracks could not be found in the oxide-based thin film sintered bodies by photosintering in Examples 1 and 2, and since the particles were not caused to coarsen, small grain boundaries were evenly dispersed throughout the sintered body. Therefore, even in the case in which stress is applied to the sintered body, energy may be dispersed and crack generation may be suppressed. Accordingly, it is evaluated that the problem of mechanical strength deterioration did not occur.

As set forth above, in some embodiments, the connection form between particles, particle shape, and density are properly formed through photosintering, and therefore, an oxide-based thin film sintered body, which has excellent durability and ionic conductivity and in which an oxide-based solid electrolyte sheet may be manufactured without peeling from a substrate, is provided.

In some embodiments, an oxide-based thin-film sintered body that is sintered at high speed through photosintering and may be manufactured in a short period of time without loss of materials such as lithium or others or substrate destruction, and may be thinned and enlarged to a large area without additional processing is provided.

In some embodiments, an oxide-based solid electrolyte sheet has excellent characteristics by suppressing interface formation and resistance increase due to element diffusion between a substrate and a sheet through sintering in a relatively short period of time.

As discussed above, the disclosed technology can be implemented in some embodiments to provide an all-solid lithium secondary battery having excellent safety and energy density, including an oxide-based solid electrolyte sheet having excellent performance such as durability, ionic conductivity and others.

**Sintered body thermal properties**

The oxide-based thin film sintered body of Example 2 and the oxide-based thin film sintered body of Example 3 were obtained, and the change in weight of the sample according to the change in temperature was confirmed using a thermogravimetric analyzer.

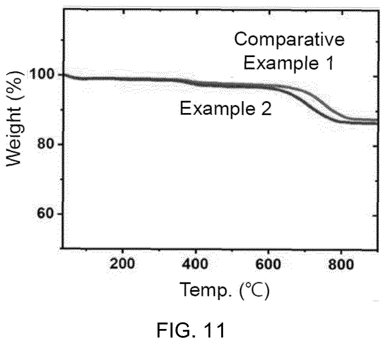

Referring to FIG. 11, as the temperature is raised to 10°C per minute, the thin film sintered bodies of Example 2 and Comparative Example 1 have similar weight loss patterns, and the binder combustion peak was not visible at 400°C for both the thin film sintered bodies of Example 2 and Comparative Example 1. Therefore, it can be confirmed that the combustion of the binder in the oxide-based thin film sintered body of Example 2 has been completed. From these results, it can be confirmed that sintering occurred by light sintering as in Example 2, as in the thin film sintered body of comparative Example 1 by heat sintering.

The above disclosed technology can be used to construct various devices, including lithium secondary batteries for a wide range applications. Lithium secondary batteries based on the disclosed technology can be used address various adverse effects such as air pollution and greenhouse emissions by powering electric vehicles (EVs) as alternatives to vehicles using fossil fuel based engines and by providing battery based energy storage systems (ESS) to store renewable energy such as solar power and wind power.

Only specific examples of implementations of certain embodiments are described. Variations, improvements and enhancements of the disclosed embodiments and other embodiments may be made based on the disclosure of this patent document.

**Claims**

1. An oxide-based thin film sintered body comprising oxide particles, the oxide-based thin film sintered body having a surface roughness Ra ranging from 0.1 to 3 $\mu$m, wherein Ra is an arithmetical mean height of a surface, wherein the oxide particles absorb light energy in a wavelength range from 10 to 1200 nm and have an energy band gap ranging from 0.1 to 15 eV.

2. The oxide-based thin film sintered body of claim 1, wherein the oxide-based thin film sintered body has a surface roughness Sa ranging from 1 to 10 $\mu$m.

3. The oxide-based thin film sintered body of claim 1 or claim 2, wherein the oxide particles have a contact area (A) between an oxide particle and another adjacent oxide particle, wherein the contact area (A) is expressed as:

$$A = \pi x a < 3\pi r^2,$$

wherein r is a radius of a major axis of a contact surface generated by a contact between an oxide particle and another adjacent oxide particle, a is a radius of a minor axis of the contact surface, and $0.1r \leq x \leq 3r$.

4. The oxide-based thin film sintered body of any one of claims 1 to 3, wherein the oxide-based thin film sintered body includes pores having a porosity ranging from 1 to 70%.

5. The oxide-based thin film sintered body of any one of claims 1 to 4, wherein at least one of the oxide particles comprise first oxide particles providing ion conductivity, preferably lithium ion conductivity, and optionally second oxide particles absorbing light energy in a wavelength region of 10 to 1200nm, preferably in a wavelength region of visible light of 380 to 780nm.

6. The oxide-based thin film sintered body of any one of claims 1 to 5, wherein at least one of the oxide particles comprises a lithium element, optionally wherein at least one of the oxide particles comprises a metal element other than lithium.

7. The oxide-based thin film sintered body of any one of claims 1 to 6, wherein the oxide particles include one or more lithium ion conductive oxide particles including at least one of a Garnet compound, a sodium super ionic conductor (NASICON) compound, or a Perovskite compound, preferably wherein at least one of the oxide particles is a lithium lanthanum zirconium oxide (LLZO) based compound.

8. The oxide-based thin film sintered body of any one of claims 1 to 7, wherein the oxide-based thin film sintered body has a binding energy value peak at a binding energy value ranging from 50 to 60 eV as measured by X-ray photoelectron spectroscopy (XPS) analysis.

9. The oxide-based thin film sintered body of any one of claims 1 to 8, wherein the oxide-based thin film sintered body further comprises colored oxide particles capable of absorbing light energy in a wavelength range from 10 to 1200 nm.

10. The oxide-based thin film sintered body of any one of claims 1 to 9, wherein the colored oxide particles include one or more kinds of oxides including at least one of a transition metal element or a lanthanide element, preferably wherein the colored oxide particles include one or more kinds of oxide particles including at least one of V, W, Fe, Bi, Zn, Co, Mn, Cu, Ce, As, Se, Sb, Cr, Ni, Nb, Mo, Ru, Rh, Pd, Pr, Nd, Tb or Er, with or without lithium.

11. An oxide-based solid electrolyte sheet comprising:
   the oxide-based thin film sintered body according to any one of claims 1 to 10.

12. The oxide-based solid electrolyte sheet of claim 15, wherein an ionic conductivity of the oxide-based solid electrolyte sheet is 0.001 to 10 mS/cm.

13. The oxide-based solid electrolyte sheet of claim 11 or 12, wherein the oxide-based thin film sintered body has a thickness of 300 $\mu$m or less, and wherein the oxide-based thin film sintered body has a hardness of 10 GPa or less.

14. A process for preparing an oxide-based thin film sintered body, comprising the steps of:

   providing oxide particles absorbing light energy in a wavelength range of 10 to 1200 nm, wherein oxide particles have an energy band gap of 0.1 to 15 eV,
   and subjecting the oxide particles to photosintering.

15. An all-solid lithium secondary battery comprising:

   a negative or non-negative electrode,
   a positive electrode facing the negative or non-negative electrode, and
   the oxide-based solid electrolyte sheet according to anyone of claims 11 to 13 provided between the negative or non-negative electrode and the anode.

FIG. 1

FIG. 2A

FIG. 2B

FIG. 2C

FIG. 2D

(a)

FIG. 3

(b)          (c)

FIG. 4

(d)

FIG. 5

NEGATIVE ELECTRODE

OXIDE-BASED SOLID
ELECTROLYTE SHEET

POSITIVE ELECTRODE

FIG. 6

FIG. 7

FIG. 8A

FIG. 8B

FIG. 8C

FIG. 9

FIG. 10A

FIG. 10B

FIG. 10C

FIG. 10D

FIG. 11

Europäisches Patentamt

European Patent Office

Office européen des brevets

# EUROPEAN SEARCH REPORT

Application Number

EP 23 20 0412

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/059871 A1 (ZHU YUNTONG [US] ET AL) 24 February 2022 (2022-02-24) * paragraphs [0042], [0044] * * example 1 * * figure 7 * | 1-8, 11-13,15 | INV. H01M10/052 H01M10/0562 |
| X | US 2022/158226 A1 (CHANG WONSEOK [KR] ET AL) 19 May 2022 (2022-05-19) * paragraphs [0167], [0168] * * examples 1, 2 * * table 3 * | 1-3,5-8, 11,12 | |
| X | CN 110 429 332 A (SHENZHEN INST ADV TECH) 8 November 2019 (2019-11-08) * claim 1 * * paragraphs [0028], [0032] - [0034] * | 14 | |
| X | HOFF LINDA C ET AL: "Laser sintering of ceramic-based solid-state battery materials", PROCEEDINGS OF THE SPIE, SPIE, US, vol. 11989, 4 March 2022 (2022-03-04), pages 119890E-119890E, XP060155302, ISSN: 0277-786X, DOI: 10.1117/12.2607752 ISBN: 978-1-5106-5738-0 * Sections 2.1 and 2.2 * | 1,9,10, 14 | TECHNICAL FIELDS SEARCHED (IPC) H01M C22C B22F |
| X | US 2021/245296 A1 (YE JIANCHAO [US] ET AL) 12 August 2021 (2021-08-12) * paragraphs [0030], [0031] * | 14 | |

The present search report has been drawn up for all claims

| Place of search | Date of completion of the search | Examiner |
|---|---|---|
| Munich | 28 February 2024 | Gregori, Giuliano |

EPO FORM 1503 03.82 (P04C01)

## ANNEX TO THE EUROPEAN SEARCH REPORT
## ON EUROPEAN PATENT APPLICATION NO.

EP 23 20 0412

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2024

| Patent document cited in search report | | Publication date | Patent family member(s) | | Publication date |
|---|---|---|---|---|---|
| US 2022059871 A1 | | 24-02-2022 | KR 20200014685 A<br>US 2020044281 A1<br>US 2022059871 A1 | | 11-02-2020<br>06-02-2020<br>24-02-2022 |
| US 2022158226 A1 | | 19-05-2022 | EP 4002517 A1<br>KR 20220069150 A<br>US 2022158226 A1 | | 25-05-2022<br>27-05-2022<br>19-05-2022 |
| CN 110429332 A | | 08-11-2019 | NONE | | |
| US 2021245296 A1 | | 12-08-2021 | NONE | | |

EPO FORM P0459

For more details about this annex : see Official Journal of the European Patent Office, No. 12/82